# EUROPÄISCHE PATENTANMELDUNG

(11) **EP 1 721 656 A1**
(43) Veröffentlichungstag der Anmeldung: **15.11.2006**
(21) Anmeldenummer: 05103728.1
(22) Anmeldetag: 04.05.2005
(51) Int. Cl.: B01D 65/02, B01D 69/02, B01D 61/14, B01D 63/08, C12H 1/06, C12G 3/08, B01D 69/10, B01D 63/10, B01D 39/16, B01D 69/14

(54) **Crossflow-Filtermembran, Membranmodul und Verfahren zur Crossflow-Tiefenfiltration**

(71) Anmelder: Filtrox AG, 9000 St. Gallen (CH)
(72) Erfinder: Gans, Ulrich, 9214 Kradolf-Schönenberg (CH); Ebert, Jürgen, 9500 Wil (CH); Loser, Werner, 9242 Oberuzwil (CH)
(74) Vertreter: Hepp, Dieter

(57) **Zusammenfassung**

Die Erfindung betrifft eine Crossflow-Filtermembran, welche eine aktive Schicht von mindestens 1mm aufweist. Mit der Crossflow-Filtermembran erfolgt eine Filtration im Querstrom-Modus entlang der Oberfläche und gleichzeitig eine Tiefenfiltration in der Tiefe der Membran.

## Beschreibung

Die Erfindung betrifft eine Crossflow-Filtermembran, ein Membranmodul, die Verwendung eines Filters und ein Verfahren zur Crossflow-Filtration gemäss den unabhängigen Patentansprüchen.

Der Einsatz von Crossflow-Filtern zur Filtration von Flüssigkeiten ist im Stand der Technik bekannt. Beispiele für Crossflow-Filter finden sich in EP 1 302 227 oder EP 208 405.

Für Crossflow-Filter werden Membranen mit einem dünnen aktiven Bereich von unter 20 µm eingesetzt. Als aktiver Bereich wird jener Bereich der Membran verstanden, in welchem die eigentliche Filtration stattfindet. Bei Crossflow-Filtermembranen ist dies üblicherweise nur ein kleiner Anteil in der Dicke der Membran. Die restliche Membran dient als Stützkörper und hat auf die Filtration keinen massgebenden Einfluss. Die Membranen bestehen insbesondere aus Kunststoff oder Keramik, oder auch aus Glas oder Metall. Ein Beispiel für Keramikmembranen findet sich in DE 198 46 041.

Die Kosten für Keramikmembranen sind relativ hoch. Die Durchflussraten sind begrenzt. Damit die Wirtschaftlichkeit solcher Membranen gewährleistet bleibt, müssen diese regelmässig regeneriert und mehrfach verwendet werden. Kunststoffmembranen sind zwar günstiger, aber deutlich kurzlebiger als Keramikmembranen.

Die Membranen werden unter Verwendung von Reinigungsmedien regeneriert. Für die Regeneration werden beispielsweise Verfahren eingesetzt, die auf Oxidation beruhen oder starke Laugen oder Säuren benötigen. Diese Verfahren sind teuer und risikoreich. Einerseits können die Membranen bei der Wiederaufbereitung beschädigt werden, andererseits können Rückstände des Reinigungsmittels die Qualität des Filtrats beeinträchtigen. Insbesondere wenn fermentierte Flüssigkeiten, z.B. Lebensmittel, filtriert werden, können Rückstände des Reinigungsmittels negative Folgen haben.

Aufgabe der vorliegenden Erfindung ist, die Nachteile des bekannten zu überwinden und insbesondere eine Membran für die Crossflow-Filtration zu schaffen, welche kostengünstig herstellbar und mit hohen Durchflussraten einsetzbar ist. Weiter ist es Aufgabe der Erfindung, die einfache Handhabung des Filters sicherzustellen.

Diese und weitere Aufgaben werden mit einer Membran, einem Membranmodul, einem dem Verfahren und einer Verwendung gemäss den unabhängigen Patentansprüchen gelöst.

Die erfindungsgemässe Crossflow-Filtermembran weist einen aktiven Bereich von mindestens 1mm, bevorzugt über 2 mm auf. Vorzugsweise erstreckt sich der aktive Bereich über die gesamte Membrandicke, so dass sich die Membran über ihre ganze Dicke zur Filtration einsetzen lässt.

Die Erfinder haben herausgefunden, dass sich Membranen mit einem verhältnismässig dicken aktiven Bereich besonders gut zur Crossflow-Filtration eignen.

Bevorzugt ist die Membran aus einem Gerüst von Fasern aufgebaut. Die Fasern können organischen oder anorganischen Ursprungs sein. Besonders geeignet sind Zellulosefasern. In das dreidimensionale Fasergerüst können Zusatzstoffe wie Kieselgur, Perlite oder weitere Füllstoffe eingelagert sein.

Gemäss einem weiteren Aspekt der Erfindung basiert die Grundstruktur der Membran auf einem Gerüst aus Zellulosefasern. Dabei können Zellulosefasern verschiedenen Ursprungs verwendet werden. Nicht nur Holzfasern sondern andere Fasern, z.B. Hanffasern können verwendet oder miteinander gemischt werden. Es sind aber auch Membranen denkbar, die auf anderen faserigen Verbindungen basieren, z.B. auf Kunststoff-, Metall- oder Glasfasern.

Die Membran kann ausserdem asymmetrisch aufgebaut sein, d.h. dass die Faserdichte, die Fasergrössen und/oder und die Zusatzstoffe nicht homogen über die gesamte Membrandicke verteilt sind. Vorzugsweise ist die Verteilung der Fasern und der Zusatzstoffe derart ausgewählt, dass im Bereich benachbart zur unfiltratseitigen Oberfläche der Membran die Membran zum Filtrieren von relativ groben Partikeln ausgebildet ist. Zur Filtratseite hin verändert sich die Struktur der Membran derart, dass feinere Anteile aus der Flüssigkeit gefiltert werden, je näher ein entsprechender Membranbereich zur filtratseitigen Oberfläche liegt. Die feinsten Teilchen werden in einem Bereich benachbart zur filtratseitigen Oberfläche der Membran zurückgehalten. Ein Vorteil bei dieser Anordnung besteht darin, dass der Durchfluss durch die Membran insgesamt grösser ist. Grobe Teilchen werden an der Oberfläche im Querstrom-Prinzip zurückgehalten. Feinere Partikel werden beim Durchtritt der Flüssigkeit durch die Membran im Innern der Membran zurückgehalten. Auf Grund der Filtration von feinen Partikeln in der Tiefe der Membran kann die Membran an der unfiltratseitigen Oberfläche so ausgebildet werden, dass nur die grössten Partikel zurückgehalten werden. Die Durchflussrate wird dadurch nicht allzu stark beeinträchtigt. Insbesondere ist es denkbar, Zusatzstoffe, insbesondere Kieselgur in einer grösseren Konzentration in einem Bereich benachbart zur Filtratseite der Membran vorzusehen.

Typischerweise können Fasern mit einer Länge von 0,5mm bis 10mm eingesetzt werden.

Besonders vorteilhaft werden der Grundstruktur der Membran Zusatzstoffe beigegeben. Dies können beispielsweise Kieselguren oder Perlite sein. Andere Beispiele für Zusatzstoffe sind allgemein geladene Teilchen oder polare Verbindungen, welche elektrisch geladene Schmutzpartikel anziehen. Diese verbessern die Filtrationsleistung der Membran durch vergrösserte Adsorption. Weitere denkbare Zusatzstoffe sind Harze, Chitin oder Fasern mit anderen Eigenschaften, z.B. in Länge oder Reissfestigkeit, als die Hauptfasern der Grundstruktur. Insbesondere ist es denkbar, die Reissfestigkeit der Membran zu erhöhen, in dem der Membran Hanffasern zugegeben werden und/oder in dem ein verhältnismässig hoher Harzanteil verwendet wird. Die Reissfestigkeit kann über 100N/50mm, typischerweise 400N/50mm betragen.

Crossflow-Filtermembranen gemäss der vorliegenden Erfindung sind günstig herstellbar. Sie weisen über längere Zeit hohe Durchflussraten auf. Ausserdem lassen sie sich im Betrieb auf einfache Weise reinigen. Aufgrund der geringen Kosten könnten sie auch als Einwegprodukte verwendet werden. Vorteilhaft werden die Membranen jedoch mehrfach regeneriert.

Üblicherweise soll bei der Crossflow-Filtration durch eine grosse Querströmungsgeschwindigkeit verhindert werden, dass sich Ablagerungen auf der Oberfläche der Membran bilden und diese verstopfen. Mit einer Membran gemäss der vorliegenden Erfindung können insbesondere feine Partikel und Kolloide in der dreidimensionalen Struktur der Membran, also in der Tiefe der Membran aufgenommen werden. Die Porengrösse der Membran kann vor allem im unfiltratseitigen Oberflächenbereich grösser gewählt werden als bei herkömmlichen Crossflow-Membranen. Dadurch ist der Durchfluss durch die Membran grösser, was eine verbesserte Filterleistung erlaubt. Bei herkömmlichen Membranen wird mit einer verhältnismässig grossen Querströmungsgeschwindigkeit gefahren, um auf der Oberfläche abgelagerte Partikel zu entfernen. Insbesondere Kolloide haben die Tendenz, stark an der Oberfläche anzuhaften. Deshalb sind grosse Querströmungsgeschwindigkeiten notwendig. Gemäss der vorliegenden Ausführungsform werden kolloidale Stoffe in der Tiefe der Membran aufgenommen. Es gibt keine zusammenhängende Deckschicht von schwierig zu entfernenden kolloidalen Stoffen. Dass sich allenfalls auf der Oberfläche der Membran ablagernde Haufwerk aus groben Partikeln lässt sich mit verhältnismässig geringer Querströmgeschwindigkeit entfernen. Dadurch wird weniger Energie zum Pumpen und zum Kühlen gebraucht. Das Druckgefälle durch die Membran ist entsprechend verringert. Besonders vorteilhaft weist die Membran reversibel kompressible Eigenschaften auf. Dies bedeutet, dass die Membran unter Druck komprimiert wird, sich aber wieder entspannt, wenn der Druck gelöst wird. Vorteilhaft wird die Membran bei einem Druckgefälle von 1 bar um 50 % der Dicke komprimiert und erholt sich nach Aufheben der Druckdifferenz zu mindestens 95 % der Dicke. Besonders vorteilhaft erholt sich die Membran nach Aufheben des Drucks vollständig.

Es hat sich gezeigt, dass sich eine reversibel kompressible Membran besonders einfach direkt in der Filteranlage reinigen lässt. Aufgrund des Transmembrandrucks wird die Membran im Betrieb komprimiert. Zum Reinigen wird der Transmembrandruck prozesstechnisch reduziert. Dadurch dehnt sich die Membran wieder aus und die Poren weiten sich auf. Darin enthaltene Partikel können auf einfache Weise mit einer Flüssigkeit, z.B. mit Wasser, ausgeschwemmt werden.

Falls eine weitergehende Regeneration der Membran gewünscht ist, kann eine sanfte Reinigung mittels einer schwachen Lauge vorgenommen werden. Die Filterleistung der regenerierten Membran entspricht der ursprünglichen Filterleistung.

Das Gerüst der Membran ist vorzugsweise derart aufgebaut, dass die Retentionsrate der erfindungsgemässen Membran der Retentionsrate einer herkömmlichen Kunststoff oder Keramikmembran mit einer Porengrösse von 0,2 µm bis 1,2 µm bei der Bierfiltration entspricht. Die erfindungsgemässe Membran ist dabei bevorzugt so aufgebaut, dass eine logarithmische Reduktionsrate für Hefezellen der Getränkeindustrie von wenigstens 10¹⁰ erzielt wird. Porengrössen der erfindungsgemässen Membran lassen sich beispielsweise mit einem "capillary flow analysis" Messgerät der Porous Materials, Inc. Ithaca, NY, USA, bestimmen. Bevorzugt ist das Membrangerüst derart aufgebaut, dass die kleinste detektierte Pore im Bereich von etwa 0,5 µm bis 1 µm liegt, die grösste detektierte Pore im Bereich zwischen 10 µm und 20 µm liegt und die durchschnittliche Porengrösse ("mean flow pore diameter") zwischen 2 µm und 8 µm, bevorzugt etwa zwischen 2 µm und 4 µm liegt. Auf Grund der Filtrationswirkung in der Tiefe der erfindungsgemässen Membran können auch mit solchen verhältnismässig grossen Porengrössen gleiche Retentionsraten erzielt werden, wie bei herkömmlichen Membranen mit geringeren Porengrössen.

Um die Oberfläche der Membran gegen Beschädigung und Verschleiss zu schützen, wird diese vorteilhaft mit einer Schutzschicht und/oder einem Abstandhalter versehen. Ein solcher Abstandhalter bzw. eine solche Schutzschicht kann sowohl auf der filtratseitigen als auch auf der unfiltratseitigen Oberfläche der Membran vorgesehen werden. Insbesondere die Schutzschicht auf der Unfiltratseitigen Oberfläche ist vorteilhaft. Diese Schutzschicht oder der Abstandhalter kann beispielsweise aus einem Gewebe und/oder einem mit Öffnungen versehenen Kunststoff bestehen. Mit einem solchen Abstandhalter kann die Lebensdauer der Membran weiter verlängert werden. Der Abstandhalter kann fest mit der Membran verbunden sein, kann aber auch nur aufgelegt oder schwach fixiert und durch den Betriebsdruck angepresst werden. Beispielsweise kann ein Gewebevlies in Kombination mit einem als Abstandshalter dienenden Kunststoffnetz zum Bilden von Flüssigkeitskanälen verwendet werden. Geeignet ist ein Abstandhalter, bei dem die Gittergrösse ungefähr der Faserlänge der darunter liegenden Membran entspricht. Dadurch ergibt sich eine besonders gute Abstützung der darunter liegenden Membran. Die Beeinträchtigung der Membran durch in Gitterzwischenräume hervorstehende oder hervortretende Fasern wird dadurch verhindert.

Die erfindungsgemässe Membran ist ausserdem im Wesentlichen frei von Aluminium, Eisen oder Schwermetallen. Ausserdem ist die Membran bevorzugt pyrogenarm 0,12 EU/ml (Endotoxin unit) und ionenarm.

Ebenfalls Bestandteil der Erfindung ist ein Modulelement für den Einbau in einem Crossflow-Filter. Das erfindungsgemässe Modulelement umfasst wenigstens eine Membran mit den zuvor beschriebenen Eigenschaften. Bevorzugt umfasst das Modulelement Zu- und/oder Abflussleitungen für das Unfiltrat bzw. das Filtrat. Vorteilhaft umfasst das Modulelement mindestens zwei Membranen. Besonders vorteilhaft werden in jedem Modulelement je zwei Membranen derart miteinander verbunden, dass der Filtratabfluss zwischen den beiden Membranen angeordnet und gegenüber der Unfiltratkammer isoliert ist. Mehrere Modulelemente können zu einem Stapel miteinander verbunden werden. Mindestens ein Modulelement oder ein Stapel von Modulelementen wird in ein Gehäuse eingespannt. Auf diese Weise wird ein Filtermodul gebildet. Die Verwendung von Modulelementen vereinfacht und beschleunigt den Austausch der gebrauchten Membranen gegen neue Membranen. Dadurch können Zeit und Kosten bei der Wartung des Filters gespart werden.

Vorteilhaft bildet filtratseitig zwischen je zwei Membranen ein Abstandshalter einen Filtratkanal, mittels welchem das Filtrat durch ein Anschlussstück in einen Filtratablauf geführt wird. Dieser Filtratablauf ist gegenüber dem Zu- und Abfluss für das Unfiltrat isoliert.

Ebenfalls bevorzugt ist zwischen den unfiltratseitigen Oberflächen von benachbarten Membranen ein Kanal für Unfiltrat gebildet. Dies ist insbesondere sinnvoll, wenn ein Modulelement zwei oder mehr Membranen umfasst. Vorteilhaft wird der Kanal für das Unfiltrat durch einen Abstandshalter gebildet. Ein zwischen den unfiltratseitigen Oberflächen benachbarter Membranen gebildeter Unfiltratraum ist vorzugsweise seitlich des Moduls geöffnet.

Weiter umfasst die Erfindung ein Verfahren zur Crossflow-Filtration einer Flüssigkeit, bei welchem die Flüssigkeit entlang einer Membran wie zuvor beschrieben geleitet wird.

Vorteilhaft wird die Flüssigkeit bei einer Strömungsgeschwindigkeit zwischen 0.1 und 2 m/s, insbesondere 0.1 bis 1 m/s, über die Membran geleitet. In diesem Geschwindigkeitsbereich ist eine besonders effiziente Filterleistung möglich. Die Energie zum Umwälzen der Flüssigkeit wird durch die geringe Geschwindigkeit im Vergleich zu herkömmlichen Verfahren reduziert.

Der Transmembrandruck beträgt typischerweise zwischen 0,1 und 2 bar.

Vorteilhaft kann die Flussrate durch die Membran geregelt werden, z.B. durch das Einstellen des Transmembrandrucks über die Membran. Die Flussrate könnte auf einen konstanten Wert geregelt werden, ein vorbestimmter zeitlicher Verlauf kann jedoch ebenso vorteilhaft sein. Die Flussrate kann z.B. 100 bis 2001/m²h bei der Getränkefiltration betragen.

Ein weiterer Aspekt der Erfindung betrifft ein Verfahren zur Reinigung der zuvor beschriebenen Crossflow-Filtermembran. Beim Verfahren zur Reinigung der Crossflow-Filtermembran wird der Transmembrandruck im Vergleich zum Druckgefälle während der Filtration reduziert. Vorteilhaft beträgt die Reduktion des Transmembranducks mindestens 50 %. Durch die Reduktion des Druckgefälles weiten sich die Poren der Membran auf. Durch Vorwärts- und/oder Rückwärtsspülung kann die Membran sanft mit Wasser oder mit einer schwachen Lauge gereinigt werden.

Besonders vorteilhaft wird eine Membran oder ein Verfahren wie zuvor beschrieben zur Crossflow-Filtration von Flüssigkeiten, insbesondere Getränken, eingesetzt. Dazu zählen insbesondere Bier oder Wein.

Ein weiterer Aspekt der Erfindung betrifft ein Verfahren zur Filtration von Flüssigkeiten. Die Flüssigkeit wird dazu im Querstrom entlang einer Membran geführt, wobei verhältnismässig grobe Partikel an der Oberfläche der Membran zurückgehalten werden. Die von diesen groben Partikeln befreite Flüssigkeit tritt quer durch die Membran hindurch. Gemäss der vorliegenden Erfindung werden beim Durchtritt der auf dieser Weise zum Teil vorfiltrierten Flüssigkeit quer durch die Membran feinere Partikel in der Tiefe der Membran zurückgehalten und aus der Flüssigkeit ausfiltriert. Dieser Aspekt der Erfindung betrifft daher ein Verfahren zur Filtration, welches an sich bekannte Querstrom-Filtrationsprinzipien mit an sich bekannten Tiefenfiltrationsprinzipien in ein und derselben Filtermembran vereinigt.

Im folgenden wird eine bevorzugte Ausführungsform der Erfindung anhand von Figuren erläutert. Es zeigen:
- Fig. 1:: eine schematische Darstellung einer erfindungsgemässen Membran,
- Fig. 2:: eine schematische Darstellung des filteraktiven Bereichs der Membran gemäss Fig. 1,
- Fig. 3:: eine schematische Darstellung eines Crossflow-Filters mit der Membran aus Fig. 1,
- Fig. 4a-d:: ein erfindungsgemässes Modulelements und den Einbau des Modulelements in ein Gehäuse,
- Fig. 5:: eine alternative Ausführungsform eines Modulelements und
- Figur 6:: eine grafische Darstellung von Transmembrandruck und Flux einer erfindungsgemässen Membran im Zeitverlauf.

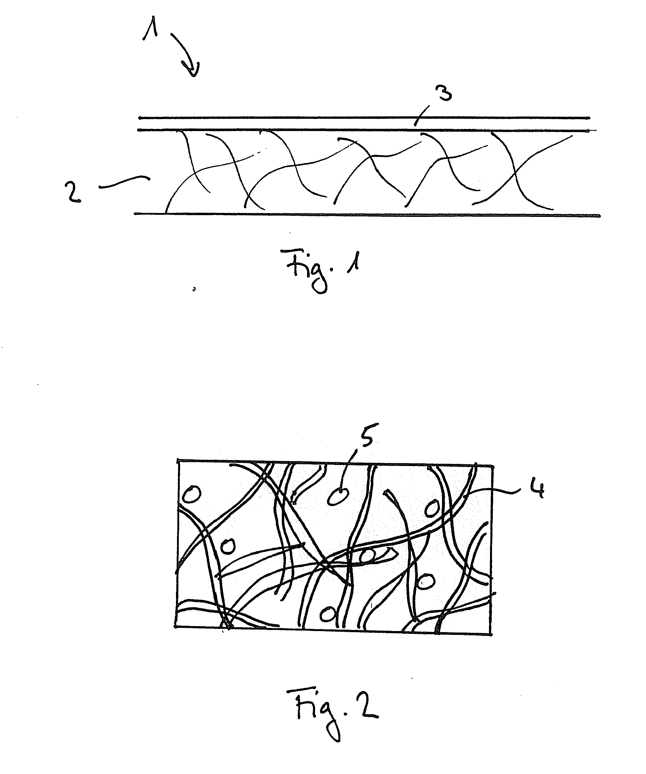

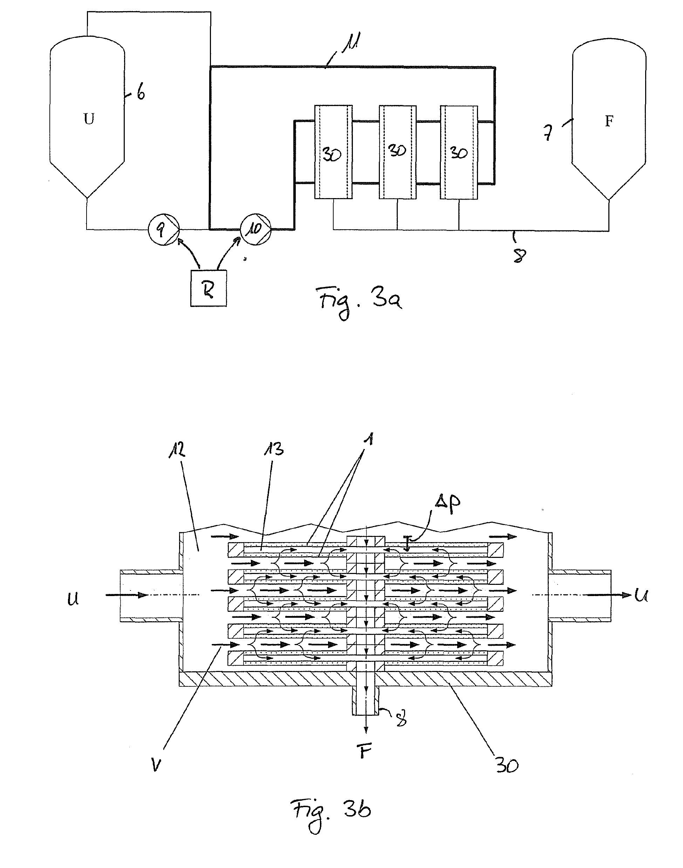

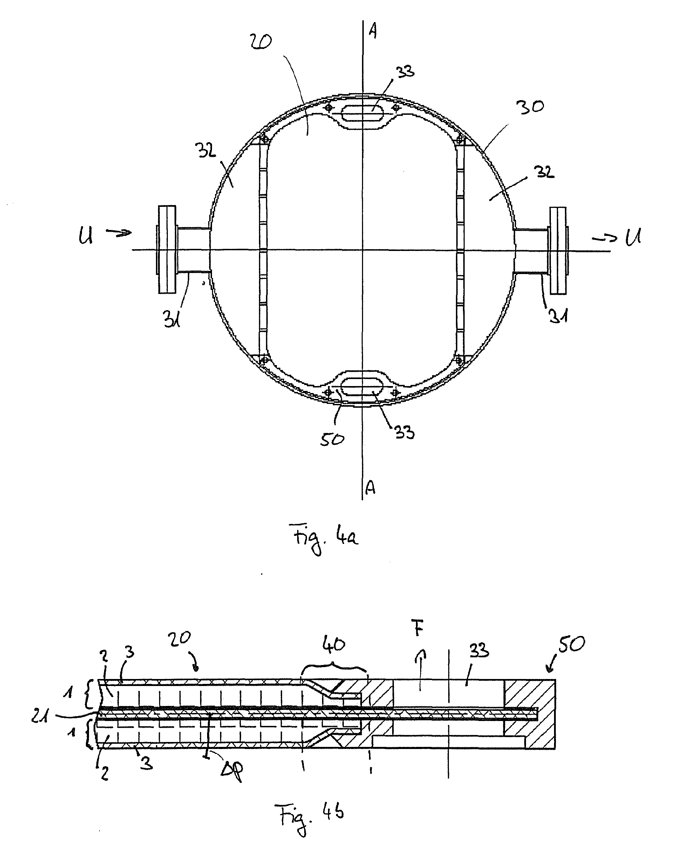

In Fig. 1 und 2 ist eine erfindungsgemässe Membran 1 dargestellt. In dieser Membran 1 werden Partikel und Kolloide mit Durchmessern von bis hinunter zu 0,1 µm aufgehalten. Die Membran 1 besteht in erster Linie aus einem dreidimensionalen Fasergerüst 2 aus Fasern 4. 55% des Trockengewichts der Membran 1 werden durch das Fasergewebe 4 und Harz gegeben. Davon sind 15% des Gewichts Chitinfasern, der Rest sind Zellulosefasern. Ein Anteil von 7% der Zellulosefasern sind Hanffasern, die restlichen Fasern sind übliche Holzzellulosefasern. Die mittlere Faserlänge der Holzzellulosefasern 4 beträgt ca. 1.5 mm. Die Hanffasern sind mit einer Länge von bis zu 6 mm deutlich länger und wirken stabilisierend. Die Fasern weisen je nach gewünschter Durchflussrate einen Mahlgrad von beispielsweise 30 - 60SR auf. Als Nassfestmittel wird Polyamidoamin-Harz zu einem Gewichtsanteil von 6% verwendet.

Zwischen den Fasern 4 sind Kieselgur und Perlite als Zusatzstoffe 5 eingelagert. Der Gewichtsanteil der Zusatzstoffe 5 beträgt 45 % des Trockengewichts der Membran.

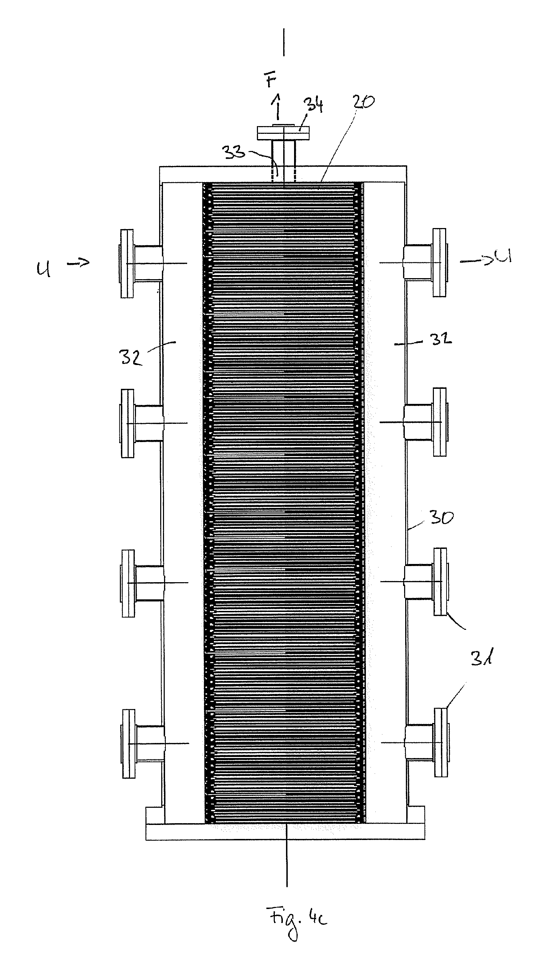

Die Dicke des filteraktiven Fasergerüstes 2 beträgt im entspannten Zustand 3,7 bis 3,9 mm. Während dem Betrieb wird die Membran 1 durch das Druckgefälle Δp (Fig. 3) auf zwischen 1.85 und 1.95 mm komprimiert. Das Flächengewicht der Membran beträgt 1300 g/m². Die Reissfestigkeit beträgt 130NM/50mm.

Der optionale Abstandshalter 3, welcher lose auf auf das filteraktive Fasergerüst aufgelegt ist, besteht aus Polypropylen (PP) und hat eine Dicke von 1 bis 2 mm. Der Abstandshalter 3 ist ein Netz mit Öffnungen von ca. 2x2 mm und hat keine Filterwirkung. Er schützt einerseits die darunter liegende Fasergerüst 2 vor Beschädigung durch das Unfiltrat U und bildet Kanäle für die Unfiltratseitige Querüberströmung. Geeignete Abstandshalter sind beispielsweise das Produkt der Nummer 5.307 der Firma Intermas oder das Produkt der Nummer XN 4510 der Firma InterNet. Diese Produkte sind aufgrund der triplanaren Struktur bevorzugt, da das Unfiltrat auf günstige Weise kanalisiert wird.

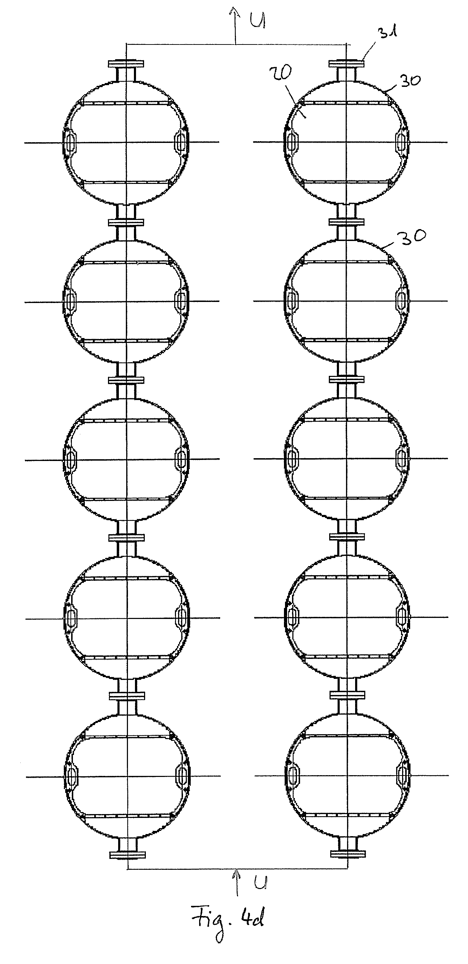

Damit das Fasergerüst 2 während dem Betrieb nicht durch den Abstandshalter 21 beschädigt wird, z.B. durch Eindringen der Gitterstruktur in das Fasergerüst 2, wird zwischen das Gerüst 2 und den Abstandshalter 21 ein Schutzvlies (nicht sichtbar) aus Polyester mit einer Stärke von ca. 0.2 mm eingelegt. Der Abstandshalter 21 und das Fasergerüst 2 sowie das dazwischen liegende Schutzvlies sind nicht fest miteinander verbunden, sondern werden während dem Betrieb durch das Druckgefälle Δp (Fig. 3b, 4b) aneinander gepresst. Es ist ausserdem auch denkbar, ein Schutzvlies zwischen das Fasergerüst 2 und den unfiltratseitigen Abstandshalter 3 vorzusehen.

In den Fig. 3a und 3b sind der Aufbau einer Crossflow-Filteranlage und das Crossflow-Filtrationsprinzip schematisch dargestellt. Die zu filtrierende Flüssigkeit befindet sich als Unfiltrat U in einem Unfiltrattank 6. Das Unfiltrat U wird mit einer Zuführpumpe 9 gefördert. Mit einer Prozesspumpe 10 wird das Unfiltrat U mit einer Geschwindigkeit von ca. 1m/s im Kreislauf 11 umgewälzt. Die Filtration findet in den Modulen 30 statt, in welchen sich Membranen 1 in aufeinandergestapelten Modulelementen (Fig. 3b) befinden. Das Filtrat F wird über einen Ablauf 8 in einen Filtrattank 7 geführt.

Ein Druckgefälle Δp von typischerweise 1 bar zwischen einem Unfiltratraum 12 und einem Filtratraum 13 führt zum Durchtritt von Flüssigkeit durch die Membran 1. Das Druckgefälle wird durch eine geeignete Regelanordnung R eingestellt, welche die Zuführpumpe 9 und die Prozesspumpe 10 steuert. Durch das Druckgefälle Δp kann die Strömungsgeschwindigkeit v des Unfiltrats geregelt werden.

Durch das Druckgefälle Δp wird ein Teil des Unfiltrats U durch die Membran 1 gedrückt. Ein Teil der Partikel des Unfiltrats wird an der Oberfläche der Membran aufgehalten, ein weiterer Teil bleibt in der Tiefe der Membran 1 hängen. Somit wird die Flüssigkeit beim Durchtritt durch die Membran auf zwei Arten filtriert. Das austretende Filtrat F wird in einem Abfluss 8 abgeführt.

Die Membran 1 ist in ein Modulelement 20 (Fig. 4a - 4d) eingebaut, welches einfach ausgewechselt werden kann. Dadurch ist die Wartung des Filters vereinfacht.

Ein erfindungsgemässes Modulelements 20 und der Einbau des Modulelements 20 in Module 30 mit einem Gehäuse ist in Fig. 4a bis d dargestellt.

In Fig. 4a sind das Modulelement 20 und das Modul 30 in Aufsicht dargestellt. Das Modul 30 hat ein Gehäuse mit einem im Wesentlichen kreisförmigen Querschnitt. Durch zwei Anschlüsse 31 wird das Unfiltrat in das Gehäuse gebracht bzw. daraus abgeführt. Das Unfiltrat befindet sich in den Unfiltraträumen 32. Zwei Abführleitungen 33 sind für das Abführen des Filtrats vorgesehen. Unfiltratseitig ist das Modulelement 20 offen, so dass zwischen den Unfiltraträumen und den Unfiltratseiten der Membran keine Abdichtung notwendig ist.

Fig. 4b zeigt einen Ausschnitt entlang des Schnittes A-A aus Fig 4a. Ein Modulelement 20 ist im Bereich des Filtratabflusses 33 dargestellt. Das Modulelement 20 umfasst zwei Membranen 1. Wie im Zusammenhang mit Fig. 1 und 2 beschrieben, umfassen die Membranen 1 im Wesentlichen ein Fasergerüst 2, das unfiltratseitig mit einem Abstandshalter 3 versehen ist. Die Abstandshalter 3 der beiden Membranen 1 weisen voneinander weg.

Zwischen den beiden Membranen 1 befindet sich ein weiterer Abstandhalter 21. Dieser besteht wiederum aus einem Netz aus PP. Zwischen dem Abstandshalter 21 und dem Fasergerüst 2 befindet sich ein nicht gezeigtes Schutzvlies. Der Abstandhalter 21 dient zur Kanalisation des Filtrats F und zum Einstellen eines konstanten Abstandes zwischen den beiden Membranen 1. Das Schutzvlies verhindert das Eindringen in das Fasergerüst. Da der Abstandhalter 21 keine Schutzfunktion für die Membranen 1 bieten muss, kann die Lochgrösse grösser gewählt werden und beträgt 2 bis 2,5 mm. Geeignet ist in diesem Fall ein Abstandhalter wie z.B. das Produkt mit der Nr. XN4510 der Firma Internet. Der Abstandhalter 21 erstreckt sich bis in den Filtratabfluss 33, so dass das Filtrat dorthin geleitet wird.

Über der Membran 1 wird ein Transmembrandruck Δp angelegt. Das Unfiltrat U überströmt die Membranen 1. Ein Teil des Unfiltrats wird aufgrund des Druckgefälles Δp durch die Membran 1 gedrückt und dabei wie zuvor beschrieben filtriert.

In einem Anschlussbereich 40 wird das Fasergerüst 2 und der Abstandshalter 3 mit einem Anschlussstück 50 verbunden. Das Anschlussstück 50 ist derart gestaltet, dass das Auswechseln des Modulelementes 20 und des aus Modulelementen 20 gebildeten Modulstapels im Gehäuse schnell und einfach auszuführen ist. Mehrere Modulelemente 20 werden zu einem Stapel aus Modulelementen zusammengebaut. Einer oder mehrere solche Stapel werden miteinander in das Gehäuse eingesetzt.

Die beiden Membranen 1 werden in ihren Randbereichen durch das Anschlussstück 40 zusammengedrückt. Das Anschlussstück 40 ist als Spritzgussteil ausgebildet. Im Anschlussstück 40 ist der Filtratabfluss 33 angeordnet. Das Anschlussstück kann beispielsweise zweiteilig ausgebildet sein. Die beiden Teile können durch Kleben, Schweissen, Klemmen oder Stecken miteinander verbunden werden. Es ist aber auch denkbar, die Membranen eines Modulelementes 20 mit einem Anschlussstück zu umspritzen.

Die Konstruktion von solchen Modulelement 20 erlaubt die Anordnung von mehreren Modulelement oder Elementstapeln innerhalb des Gehäuses 30. Die einzelnen Filtratabflüsse 33 werden übereinander angeordnet und dichtend miteinander verbunden, so dass sich ein durchgehender Filtratabfluss ergibt. Auf Grund der Abstandshalter 3 zwischen benachbarten Modulelementen 20 werden Kanäle für das Unfiltrat gebildet, welche in die Unfiltraträume 32 münden. Unfiltrat U strömt (siehe linke Seite in Figur 4a) über den einen Unfiltratrand 32 zwischen den Membranen 1 benachbarter Module hindurch. Bei dieser tangentialen Überströmung tritt ein Teil des Unfiltrats wie beschrieben durch die Membran 1 und wird dabei filtriert. Der Rest des Unfiltrats überfliesst die Membran 1 und tritt wieder in den Unfiltratraum 32 (siehe rechte Seite in Figur 4a). Vom rechten Unfiltratausgang wird das Unfiltrat U im Kreislauf wieder der Zufuhr auf der linken Seite in Figur 4a zugeführt.

In Fig. 4c ist das Gehäuse 30 in einer seitlichen Ansicht dargestellt. Das Gehäuse 30 ist im Wesentlichen zylinderförmig. Je vier Anschlüsse 31 für die Zu- bzw. Abfuhr des Unfiltrats U sind vorgesehen. Weiter ist ein Abfluss 34 für das Filtrat F sichtbar, in welchen die Abflussleitungen 33 münden. Im Innenraum des Gehäuses 30 sind 100 Modulelemente 20 übereinander geschichtet. Es können beispielsweise 100 einzelne Modulelemente 20 oder 20 Elementstapel mit fünf Modulelementen verwendet werden. Jedes der Module ist wie zuvor Anhand von Fig. 4a und 4b beschrieben in das Gehäuse eingebaut. Die Modulelemente 20 liegen dicht aufeinander auf, so dass die Abstandshalter 3 zweier benachbarter Modulelemente 20 Unfiltratkanäle zwischen den Modulelementen 20 bilden. Das Unfiltrat U strömt dann zwischen den Modulelementen 20 tangential entlang der Membranoberfläche.

In Fig. 4d ist dargestellt, wie mehrere Gehäuse 30 in einer Filteranlage seriell und parallel zusammengeschlossen werden können.

In diesem Beispiel umfasst jedes Modulelement 20 zwei Membranen 1. Selbstverständlich ist es auch denkbar, Modulelemente 20 mit mehreren Membranen 1 vorzusehen.

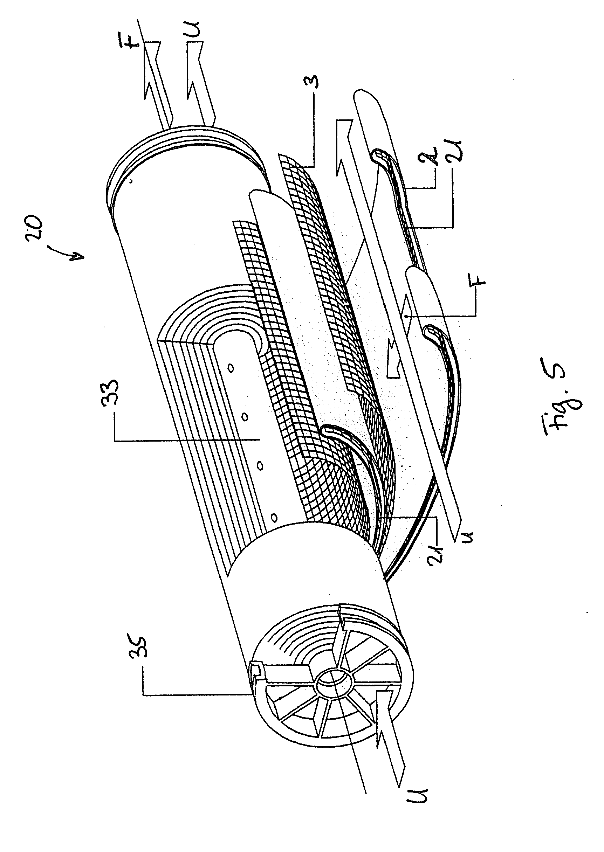

Eine alternative Ausführungsform eines Modulelements 20 ist in Fig. 5 dargestellt. Funktionsgleiche Komponenten werden mit den gleichen Bezugszeichen bezeichnet wie im Ausführungsbeispiel gemäss Fig. 4a bis 4d.

In dieser Ausführungsform ist das Modulelements 20 als Wickelmodul ausgebildet. Das Fasergerüst 2 wird um einen Filtratabfluss 33 gewickelt. So entsteht ein zylinderförmiges Modulelement 20. Dabei wird unfiltratseitig ein Abstandhalter 3 und filtratseitig ein Abstandhalter 21 zwischen die Wicklungen des Fasergerüstes 2 gelegt. Das Unfiltrat U überströmt die Membran entlang der Längsrichtung des Zylinders. Das Filtrat wird senkrecht dazu spiralförmig in die Mitte zum Filtratabfluss 33 geleitet. Das Abschlussstück 35 dient der Stabilisierung des Moduls und ist geeignet zum einfachen Einbauen in ein Modul 30.

Wegen der zylindrischen Grundform des Modulelements 20 aus diesem Ausführungsbeispiel ist ein zylinderförmiges Modul 30 (nicht dargestellt) analog zu Fig. 4 geeignet. Die zylindrische Form des Modul 30 ist wegen der optimalen Druckverteilung innerhalb des Gehäuses bevorzugt, andere Formen sind jedoch ebenfalls denkbar.

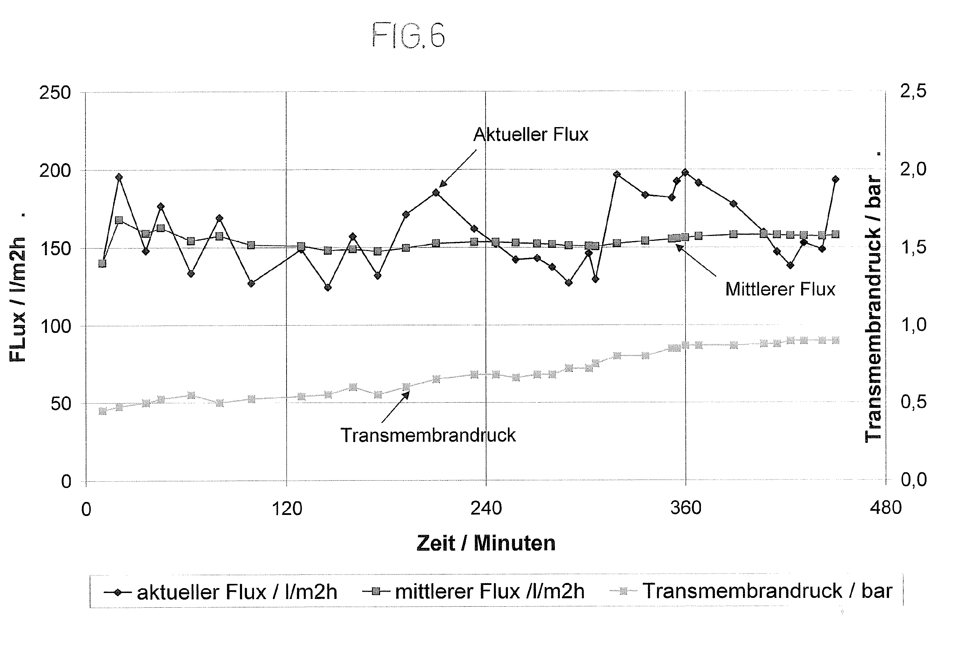

Versuche mit erfindungsgemässen Membranen haben gezeigt, dass sich die Flussraten über lange Zeit ohne Regeneration konstant halten lassen. Mit einer Überströmgeschwindigkeit von 1m/s konnte beispielsweise bei der Filtration von Bier über eine Zeit von 480 Minuten der mittlere Fluss auf einem Wert von ca. 1501/m²h gehalten werden. Eine Messreihe ist beispielhaft in Fig. 6 gezeigt. Dabei musste der Transmembrandruck im Verlauf der Zeit lediglich von ca. 0,5 Bar auf etwas weniger als 1 bar erhöht werden. Mit der wie in Figuren 1 und 2 gezeigt aufgebauten Membran wurde eine Retention erreicht, welche vergleichbar mit der Retentionsrate von herkömmlichen Kunststoff oder Keramikmembranen mit einem Porendurchmesser von etwa 0,1 µm bis 0,2 µm entspricht. Dazu wurde eine Membran 1 verwendet, welche aus einem Fasergerüst 2 aufgebaut ist. Die Fasern wurden derart ausgewählt, dass sich gemessene Porengrössen (Messung durch ein capillary flow analysis Messgerät CFP - 1100-A der Porous Materials Inc, Itaka, NY, USA, mit Wasser als Messflüssigkeit wie folgt ergeben:

| | | |
|---|---|---|
| **Minimum pore size** | **Mean pore size** | **Maximum pore size** |
| **0,82** | **4,05** | **15,57** |

## Patentansprüche

1. Crossflow-Filtermembran (1), **dadurch gekennzeichnet, dass** die Membran (1) eine aktive Schicht (2) von mindestens 1mm, bevorzugt mindestens 2 mm Dicke aufweist.

2. Crossflow-Filtermembran (1) nach Anspruch 1, **dadurch gekennzeichnet, dass** die Membran (1) über ihre ganze Dicke als zur Filtration aktive Schicht (2) ausgebildet ist.

3. Membran (1) insbesondere nach Anspruch 1 oder 2, **dadurch gekennzeichnet, dass** die Membran (1) aus einem dreidimensionalen Gerüst, insbesondere aus Fasern (4), bevorzugt aus Zellulosefasern, besteht.

4. Membran (1) nach Anspruch 3, **dadurch gekennzeichnet, dass** das dreidimensionale Gerüst durch ein Harz verfestigt ist.

5. Membran (1) nach einem der Ansprüche 1 bis 4, **dadurch gekennzeichnet, dass** die Membran (1) derart aufgebaut ist, dass ihre Retentionsrate der Retentionsrate von herkömmlichen Kunststoff oder Keramikmembranen mit einer Porengrösse von 0,2 µm bis 1,2 µm bei der Bierfiltration entspricht.

6. Membran (1) nach einem der Ansprüche 2 bis 5, **dadurch gekennzeichnet, dass** die Fasern (4) eine Länge von 0.5 - 10mm aufweisen.

7. Membran (1) nach einem der Ansprüche 1 bis 6, **dadurch gekennzeichnet, dass** in der Membran (1) Zusatzstoffe (5), insbesondere Kieselgur und/oder Perlite, eingelagert sind.

8. Membran nach einem der Ansprüche 1 bis 7, **dadurch gekennzeichnet, dass** die Membran reversibel kompressibel ist.

9. Membran (1) nach einem der vorangehenden Ansprüche, **dadurch gekennzeichnet, dass** die Membran (1) insbesondere an der unfiltratseitigen Oberfläche mit einem Abstandshalter (3, 21) versehen ist.

10. Membran (1) nach Anspruch 9, **dadurch gekennzeichnet, dass** zwischen dem Abstandshalter (21) und der Filterschicht (2) eine Schutzschicht, insbesondere ein Gewebe oder Vlies angeordnet ist.

11. Membran (1) nach einem der Ansprüche 1 bis 10, **dadurch gekennzeichnet, dass** die Struktur der Membran (1) bezogen auf eine Richtung senkrecht zur Membranoberfläche inhomogen ist, dass insbesondere Faserdichte, Faserlängen und allenfalls in der Membran (1) eingelagerte Zusatzstoffe (5) inhomogen verteilt sind.

12. Membran (1) nach Anspruch 11, **dadurch gekennzeichnet, dass** die Fasern (4) und/oder Zusatzstoffe (5) derart verteilt sind, dass in einem filtratseitigen Bereich der Membran (1) verglichen zum unfiltratseitigen Bereich der Membran (1) feinere Partikel aus dem Unfiltrat (U) filtriert werden.

13. Modulelement (20) für den Einbau in einem Crossflow-Filter, wobei das Modulelement (20) wenigstens eine Membran (1) gemäss einem der Ansprüche 1 bis 12 enthält.

14. Modulelement (20) nach Anspruch 13, **dadurch gekennzeichnet, dass** das Modulelement (20) zwei Membranen (1) aufweist, wobei filtratseitig zwischen den Membranen (1) ein Filtratabflusskanal gebildet ist.

15. Modulelement (20) nach Anspruch 14, **dadurch gekennzeichnet, dass** der Abflusskanal durch einen Abstandshalter (21) gebildet ist.

16. Modulelement (20) nach Anspruch 15, **dadurch gekennzeichnet, dass** der Abstandshalter (21) einen Filtratkanal bildet, mittels welchem das Filtrat (F) seitlich durch ein Anschlussstück (40) in einen Filtratablauf (33) führbar ist.

17. Modulelement (20) nach einem der Ansprüche 13 bis 16, **dadurch gekennzeichnet, dass** zwischen den unfiltratseitigen Oberflächen von benachbarten Membranen (1) ein Kanal für Unfiltrat (U) gebildet ist.

18. Modulelement (20) nach Anspruch 17, **dadurch gekennzeichnet, dass** der Kanal für das Unfiltrat (U) durch einen Abstandshalter (3) gebildet ist.

19. Modulelement (20) nach Anspruch 18, **dadurch gekennzeichnet, dass** ein zwischen den unfiltratseitigen Oberflächen benachbarter Membranen (1) gebildeter Unfiltratraum seitlich des Moduls geöffnet ist.

20. Verfahren zur Crossflow-Filtration einer Flüssigkeit, insbesondere eines Getränks, wobei die Flüssigkeit entlang einer Membran (1) gemäss einem der Ansprüche 1 bis 2 geleitet wird.

21. Verfahren nach Anspruch 20, **dadurch gekennzeichnet, dass** die Flüssigkeit mit einer Strömungsgeschwindigkeit zwischen 0.1 und 2 m/s und/oder mit einem Transmembrandruck (Δp) von 0.01 bis 2 bar, vorzugsweise etwa 1 bar über die bzw. durch die Membran (1) geleitet wird.

22. Verfahren nach einem der Ansprüche 20 oder 21, **dadurch gekennzeichnet, dass** die Durchflussrate durch die Membran (1) geregelt wird, insbesondere durch Einstellen des Transmembrandrucks (Δp).

23. Verfahren zur Filtration einer Flüssigkeit, insbesondere eines Getränks, **dadurch gekennzeichnet, dass** die Flüssigkeit im Querstrom über eine Membran (1) filtriert wird und dass der quer durch die Membran (1) insbesondere nach einem der Ansprüche 1 bis 12 hindurchtretende Teil der Flüssigkeit zusätzlich beim Durchtritt durch die Membran (1) in der Tiefe der Membran (1) filtriert wird.

24. Verfahren zur Reinigung einer Crossflow-Filtermembran, insbesondere nach einem der Ansprüche 1 bis 12, **dadurch gekennzeichnet, dass** zur Reinigung der transmembrane Druck (Δp) quer zur Membran (1) im Vergleich zum Transmembrandruck (Δp) während der Filtration reduziert wird, wodurch sich die Membran (1) ausdehnt und dass in der Membran (1) abgelagerte Teile mit einer Reinigungsflüssigkeit entfernt werden.

25. Verfahren nach Anspruch 24, **dadurch gekennzeichnet, dass** der Transmembrandruck (Δp) um mindestens 50% reduziert wird.
